# EUROPÄISCHE PATENTSCHRIFT

(11) **EP 0 515 359 B1**
(45) Veröffentlichungstag und Bekanntmachung des Hinweises auf die Patenterteilung: **04.05.1994**
(21) Anmeldenummer: 90903296.3
(22) Anmeldetag: 21.02.1990
(51) Int. Cl.: F16B 45/02

(54) **KARABINERHAKEN**
SNAP HOOK
MOUSQUETON

(43) Veröffentlichungstag der Anmeldung: 02.12.1992
(60) Teilanmeldung: 93112672.6
(73) Patentinhaber: STUBAI- WERKZEUGINDUSTRIE REGISTRIERTE GENOSSENSCHAFT MIT BESCHRÄNKTER HAFTUNG, A-6166 Fulpmes (AT)
(72) Erfinder: HÖRTNAGL, Johann, A-6166 Fulpmes (AT)
(74) Vertreter: Hofinger, Engelbert, DDr.
(86) Internationale Anmeldenummer: AT9000018
(87) Internationale Veröffentlichungsnummer: WO9113264

(56) Entgegenhaltungen:
- EP-A- 0 109 163
- AT-B- 303 586
- FR-A- 1 518 783
- GB-A- 12 577

## Beschreibung

Karabinerhaken sind allgemein mit einem eine Einführöffnung aufweisenden Bügel, und mit einem die Öffnung übergreifenden Verschlußteil versehen, der gegen eine Rückstellfeder an einem ersten Ende des Bügels nach innen schwenkbar gelagert ist, und im zweiten Ende des Bügels einliegt.

Bei einem derartigen aus der EP-A 109 163, insbesondere Fig. 13, bekannten Karabinerhaken ist der Verschlußteil an einem Mittelsteg nach innen schwenkbar gelagert, der an einem ersten Ende des Bügels ausgebildet ist und in den Verschlußteil eingreift. Der Verschlußteil weist schwenklagerseitig eine Ausnehmung auf, in der ein von einer Rückstellfeder beaufschlagter Sperrschieber in Längsrichtung des Verschlußteiles verschiebbar angeordnet ist. Der eine Sperrfläche aufweisende Sperrschieber liegt an einer zur Schwenkachse exzentrischen und im Schwenkweg des Verschlußteiles liegenden Stützfläche des Mittelsteges an und ist mittels eines äußeren Betätigungsgriffes zwischen einer die Schwenkbewegung des Verschlußteiles blockierenden Schließstellung und einer die Öffnungsbewegung des Verschlußteiles erlaubenden Freigabestellung bewegbar. Zum Öffnen des Karabiners wird der Sperrschieber mittels des Betätigungsgriffes in die Freigabestellung bewegt, worauf der Verschlußteil nach innen geschwenkt werden kann. Ein Formschluß in Längsrichtung, der vor allem bei Zugüberbelastung erforderlich ist, ist ebenfalls nicht gegeben.

Die Erfindung hat es sich daher zur Aufgabe gestellt, einen Karabinerhaken mit einer Sicherung des Verschlußteiles in der Schließstellung so auszubilden, daß die Entsicherung und Öffnung des Verschlußteiles in einem harmonischen, einhändisch erwirkbaren Bewegungsablauf erfolgt.

Ein erfindungsgemäßer Karabinerhaken erreicht dies durch die im Patentanspruch 1 gekennzeichneten Merkmale. Die problemlose Betätigung mit einer Hand wird dabei vor allem durch die Anlage des Sperrschiebers an der Gleitbahn der exzentrischen Stützfläche erzielt, deren Abstand zur Schwenkachse sich mit zunehmendem Schwenkwinkel vergrößert.

In einer bevorzugten Ausführung ist vorgesehen, daß sich die Sperrfläche des Sperrschiebers in einem selbsthemmenden Winkel zur Längsachse des Sperrschiebers zum Bügelinneren hin erstreckt. Dieser Winkel kann insbesondere etwa 15° betragen. Die Anordnung der Sperrfläche in einem selbsthemmenden Winkel verfeinert den Bewegungsablauf, da die im Winkel zur Längsachse verlaufenden Flächen eine von der Längsbewegung abhängige, gleichzeitige Schwenkbewegung erlauben. Die Verschwenkung ergibt sich dabei dadurch, daß die von außen von der Hand auf den Betätigungsgriff ausgeübte Kraft nicht parallel zur Längsachse eingeleitet wird, sondern schräg dazu.

Diese etwa einem Kreisbogen folgende Bewegung des Betätigungsgriffes wird auch über den restlichen Schwenkbereich annähernd beibehalten, wenn der Betätigungsgriff an einem schräg nach hinten verlaufenden Schenkel des Sperrschiebers angeordnet ist und dieser Winkel vorzugsweise 45° zur Längsachse beträgt. Da dadurch eine beträchtliche Verschiebung des Sperrschiebers über das für die Entriegelung erforderliche Ausmaß stattfindet, ist in einer weiteren bevorzugten Ausführung vorgesehen, daß der Sperrschieber eine axiale Bohrung aufweist, in der die Rückstellfeder abgestützt ist. Dadurch wird für die im Verschlußteil eingeschlossene Rückstellfeder ausreichend Raum geschaffen, und die notwendige Verschiebelänge des Sperrschiebers erzielt.

Die Ausbildung der Sicherung im ersten Bügelende gestattet es, das zweite Bügelende und das dort einliegende Vorderende des Verschlußteiles bei einer eine plastische Verformung des Bügels bewirkenden Zugüberlastung ineinander zu verhaken, wobei zumindest das zweite Bügelende möglichst gerundete, das Ein- und Ausführen des Seiles, Gurtbandes oder dergleichen nicht behindernde Außenflächen aufweisen soll. Im Hinblick darauf sieht eine bevorzugte Ausführung des Karabinerhakens vor, daß das zweite Ende des Bügels nach innen abgeschrägt ist und beiderseits eines in der Bügelebene liegenden Mittelsteges je eine Ausnehmung vorgesehen ist, und daß der Einliegebereich des Verschlußteiles eine dem Mittelsteg entsprechende, schräge Längsnut und den Ausnehmungen entsprechende Endhaken aufweist, die durch eine Quernut vom Rest des Verschlußteiles getrennt sind. Im zweiten Bügelende sind somit zwar Ausnehmungen vorgesehen, die der Verhakung des Einliegebereiches des Verschlußteiles dienen, wobei aber durch die Ausbidung des Mittelsteges alle mit dem Seil oder dem Gurtband in Berührung kommenden Flächen gerundet und kantenfrei sind. Da die Verhakung erst bei hoher Zugbelastung wirksam wird, ist in unbelastetem bzw. wenig belastetem Zustand ausreichend Spiel um das Verschwenken des Verschlußteiles sicherzustellen.

Insbesondere für Gleitschirme und Hängegleiter, deren Karabinerhaken Gurtbänder aufnehmen, ist in einer weiteren bevorzugten Ausführung vorgesehen, daß der Karabinerhaken eine annähernd trapezförmige Form aufweist, in der der Verschlußteil einen Seitenschenkel darstellt, wobei das erste Bügelende vom Grundschenkel hochgebogen und das zweite Bügelende vom Deckschenkel heruntergebogen ist. Da in einer derartigen Ausführung auf den Grund- und auf den Deckschenkel größere Hebelkräfte einwirken, kann es einerseits zweckmäßig sein, die beiden Schenkel jeweils im Bügelinneren geringfügig auszubiegen, und andererseits den dem Verschlußteil gegenüberliegenden Seitenschenkel in der Bügelebene zu verbreitern und ihn gegebenenfalls auch abzuflachen. Wenn in dieser Ausführung der beschriebene Sperrschieber mit einer im Winkel zur Längsachse sich erstreckenden Sperrfläche verwendet wird, so ergibt sich für den Weg des Betätigungsgriffes vorzugsweise etwa jener Kreisbogen, auf dem die Außenkurve des hochgebogenen ersten Bügelendes liegt, was den Öffnungsbewegungsablauf nochmals bedienungsfreundlicher erscheinen läßt.

Nachstehend wird nun die Erfindung an Hand der Figuren der beiliegenden Zeichnungen näher beschrieben. Es zeigen:
Fig. 1 einen Karabinerhaken in Schließstellung mit teilgeschnittenem Verschlußteil,
Fig. 2 den Karabinerhaken in Offenstellung, und
Fig. 3 einen Schritt nach der Linie III-III in Fig. 1.

Ein Karabinerhaken weist einen offenen Bügel 1 auf, dessen Öffnung mittels eines schwenkbaren Verschlußteiles 5 verschlossen bzw. verschließbar ist. Der Karabinerhaken besitzt die Form eines Trapezes, wobei der Verschlußteil 5 einen Seitenschenkel bildet, und dessen Schwenkachse an einem ersten Ende 6 des Bügels 1 vorgesehen ist, das vom Grundschenkel 4 hochgebogen ist. Das einen Einliegebereich 26 des Verschlußteiles 5 aufnehmende zweite Ende 7 des Bügels 1 ist vom Deckschenkel 3 hinuntergebogen, wobei das zweite Bügelende 7 und der Einliegebereich 26 des Verschlußteiles 5 so ausgebildet sind, daß bei hoher Zugbelastung, insbesondere Zugüberbelastung ein Formschluß wirksam wird. Hiezu ist das zweite Bügelende 7, das zum leichteren Einführen eines Gurtbandes oder Seiles nach innen abgeschrägt ist und gerundete möglichst hindernisfreie Flächen aufweist, mit zwei Ausnehmungen 17 versehen, die symmetrisch zur Bügelebene beiderseits eines Mittelsteges 19 ausgebildet sind. Die Seitenwände der Ausnehmungen 17 verlaufen etwa U-förmig, wobei die der Bügelöffnung nähere Seitenwand eine hintergreifbare Ausnehmung 25 aufweist. Der Einliegebereich 26 des Verschlußteiles 5 weist eine dem Mittelsteg 19 entsprechende, schräg verlaufende Längsnut 23 und eine Quernut 24 auf, sodaß Endhaken 18 gebildet sind, die den Ausnehmungen 17 entsprechen. Die Endhaken 18 weisen dabei eine zur Ausnehmung 25 weisende Ausbuchtung auf, die erst bei hoher Zugbelastung in Eingriff kommen.

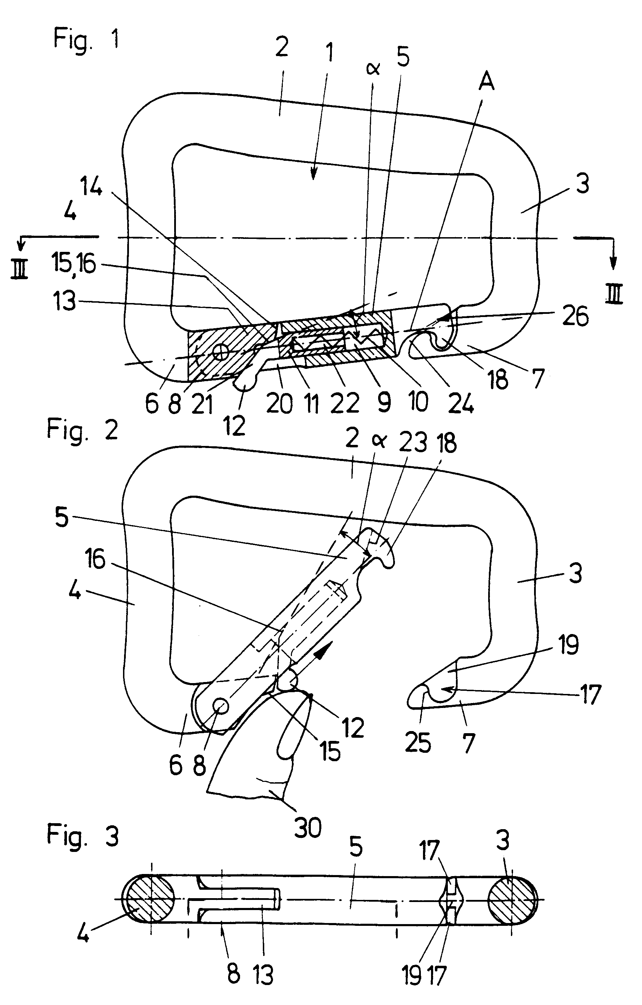

Um möglichst hohe Zugkräfte aufnehmen zu können, ohne bereits den Eingriff der Endhaken 18 zu bewirken, sind der Grundschenkel 4 und der Deckschenkel 3 jeweils nach innen ausgebogen, wie besonders aus der Schnittdarstellung der Fig. 3 sichtbar ist, und der dem Verschlußteil 5 gegenüberliegende Seitenschenkel 4 in der Bügelebene verbreitet und zusätzlich abgeflacht, sodaß dessen Querschnitt annähernd oval ist.

Am ersten Bügelende 6 ist ein Mittelsteg 13 vorgesehen, der eine Schwenkachse 8 aufnimmt. Auf dieser ist der Verschlußteil 5 schwenkbar gelagert, dessen lagerseitiges Ende einen sich in die Bügelebene erstreckender Längsschlitz 20 aufweist, sodaß die beiden Außenstege von der Schwenkachse 8 durchsetzt werden. Ausgehend vom Längsschlitz 20 ist eine zentrale Bohrung 9 im Verschlußteil 5 vorgesehen, an deren Boden sich eine als Rückstellfeder 10 wirkende Druckfeder abstützt. In der Bohrung 9 ist ein Sperrschieber 11 verschiebbar, der ebenfalls eine Bohrung 22 aufweist, an deren Boden das zweite Ende der Rückstellfeder 10 anliegt. Der Sperrschieber 11 ist am schwenklagerseitigen Ende mit einem schräg durch den Längsschlitz 20 nach hinten außen führenden Schenkel 21 versehen, der in einem an der Außenseite des Verschlußteiles 5 und damit an der Außenseite des Karabinerhakens zugänglichen Betätigungsgriff 12 endet. Der Schenkel 21 erstreckt sich in einem Winkel von etwa 45° zur Längsachse A bzw. Bohrung 9 des Verschlußteiles 5. Der Mittelsteg 13 erstreckt sich an der Bügelinnenseite in Längsrichtung weiter über die Schwenkachse 8 hinaus als an der Außenseite, an der der Verschieberaum für den Schenkel 20 des Sperrschiebers 11 ausgespart ist. Die Stirnfläche des Mittelsteges 13 ist leicht konvex gekrümmt und liegt etwa in dem Kreisbogen, der durch die Außenlinie des vom Grundschenkel 4 hochgebogenen ersten Bügelendes 6 gegeben ist, sodaß die Stirnfläche eine zur Schwenkachse 8 exzentrische Fläche 14 bildet. Diese geht etwa mittig in eine Rastfläche 15 über, die sich in einem selbsthemmenden Winkel α zur Längsachse A des Verschlußteiles 5 in Schließstellung erstreckt. Der Winkel α beträgt dabei bevorzugt etwa 15°. An das der Schwenkachse 8 nähere Ende der Rastfläche 15 schließt ein weiterer Flächenabschnitt der Stirnfläche des Mittelsteges 13 an, der etwa unter 45° und in Schließstellung parallel zum Schenkel 21 des Sperrschiebers 11 verläuft. Gegengleich zur Rastfläche 15 weist der Sperrschieber 11 an der ins Bügelinnere weisenden Seite im Übergangsbereich zwischen dem in der Bohrung 9 verschiebbaren Teil und dem herausführenden Schenkel 21 eine Sperrfläche 16 auf. In der in Fig. 1 gezeigten Schließstellung des Verschlußteiles 5 preßt sich die Sperrfläche 16 gegen die Rastfläche 15, sodaß aufgrund des selbsthemmenden Winkels α die Verschwenkung des Verschlußteiles 5 gesperrt ist. Wird der Sperrschieber 11 mittels des außenseitigen Betätigungsgriffes 12 in Längsrichtung verschoben, so würde sich die Sperrfläche 16 von der Rastfläche 15 lösen. Da jedoch die Krafteinleitung schräg von außen erfolgt, findet gleichzeitig bereits eine angepaßte Schwenkbewegung statt, sodaß die Sperrfläche 16 entlang der Rastfläche 15 bis zum Übergang zur exzentrischen Fläche 14 gleitet. Von diesem Moment an gleitet die innere Fläche des Schenkels 21 entlang der exzentrischen Fläche 14 weiter, sodaß auch während der weiteren Schwenkbewegung des Verschlußteiles 5 der Sperrschieber 11 unter Kompression der Rückstellfeder 10 erfolgt, wobei die auf dem Betätigungsgriff 12 auszuübende Kraft trotz Erhöhung der Kompression geringer wird. Der beispielsweise mit dem Daumen 30 (Fig. 2) verschiebbare Betätigungsgriff 12 bewegt sich dank des Zusammenspiels der erwähnten Flächen annähernd entlang des Kreisbogens, dessen Mittelpunkt innerhalb des hochgebogenen ersten Bügelendes liegt, woraus sich ein äußerst harmonischer, entlang des Kreisbogens abwälzender Bewegungsablauf ergibt.

## Patentansprüche

1. Karabinerhaken mit einem eine Einführöffnung aufweisenden Bügel (1), und mit einem die Öffnung übergreifenden Verschlußteil (5), der an einem in den Verschlußteil (5) eingreifenden, an einem ersten Ende (6) des Bügels (1) ausgebildeten Mittelsteg (13) nach innen schwenkbar gelagert ist, im zweiten Ende (7) des Bügels (1) einliegt, und eine schwenklagerseitig offene Bohrung (9) aufweist, in der ein von einer Rückstellfeder (10) beaufschlagter Sperrschieber (11) in Längsrichtung des Verschlußteiles (5) verschiebbar angeordnet ist, wobei der Sperrschieber (11) eine ins Bügelinnere weisende Sperrfläche (16) aufweist, die an einer zur Schwenkachse (8) exzentrischen und im Schwenkweg des Verschlußteiles (5) liegenden Stützfläche (14) des Mittelsteges (13) anliegt, und mittels eines äußeren Betätigungsgriffes (12) zwischen einer die Schwenkbewegung des Verschlußteiles (5) blockierenden Schließstellung und einer die Öffnungsbewegung des Verschlußteiles (5) erlaubenden Freigabestellung bewegbar ist, und wobei die exzentrische Stützfläche (14, 15) eine Gleitbahn (14) für den Sperrschieber (11) aufweist, deren Abstand zur Schwenkachse (8) sich mit zunehmendem Schwenkwinkel vergrößert.

2. Karabinerhaken nach Anspruch 1, dadurch gekennzeichnet, daß sich die Sperrfläche (16) des Sperrschiebers (11) in einem selbsthemmenden Winkel (α) zur Längsachse des Sperrschiebers (11) zum Bügelinneren hin erstreckt.

3. Karabinerhaken nach Anspruch 2, dadurch gekennzeichnet, daß der Winkel (α) etwa 15° beträgt.

4. Karabinerhaken nach einem der Ansprüche 1 bis 3, dadurch gekennzeichnet, daß der Betätigungsgriff (12) an einem schräg nach hinten verlaufenden Schenkel (21) des Sperrschiebers (11) angeordnet ist.

5. Karabinerhaken nach Anspruch 4, dadurch gekennzeichnet, daß sich der Schenkel (21) des Sperrschiebers (11) in einem Winkel von etwa 45° zur Längsachse erstreckt.

6. Karabinerhaken nach einem der Ansprüche 1 bis 5, dadurch gekennzeichnet, daß der Sperrschieber (11) eine axiale Bohrung (22) aufweist, in der die Rückstellfeder (10) abgestützt ist.

7. Karabinerhaken nach einem der Ansprüche 1 bis 6, dadurch gekennzeichnet, daß das zweite Ende (7) des Bügels (1) nach innen abgeschrägt ist und beiderseits eines in der Bügelebene liegenden Mittelsteges (19) eine Ausnehmung (17) vorgesehen ist, und daß der Einliegebereich (20) des Verschlußteiles (5) eine dem Mittelsteg (19) entsprechende, schräge Längsnut (23) und den Ausnehmungen (17) entsprechende Endhaken (18) aufweist, die durch eine Quernut (24) vom Rest des Verschlußteiles (5) getrennt sind.

8. Karabinerhaken nach einem der Ansprüche 1 bis 7, dadurch gekennzeichnet, daß der Karabinerhaken eine annähernd trapezförmige Form aufweist, in der der Verschlußteil (5) einen Seitenschenkel darstellt, wobei das erste Bügelende (6) vom Grundschenkel (4) hochgebogen und das zweite Bügelende (7) vom Deckschenkel (3) heruntergebogen ist.

9. Karabinerhaken nach Anspruch 8, dadurch gekennzeichnet, daß der Grundschenkel (4) und der Deckschenkel (3) jeweils ins Bügelinnere ausgebogen sind.

10. Karabinerhaken nach Anspruch 8, dadurch gekennzeichnet, daß der dem Verschlußteil (5) gegenüberliegende Seitenschenkel (2) in der Bügelebene verbreitet und gegebenenfalls abgeflacht ist.

## Claims

1. Karabiner with a frame (1) having an entry aperture, and with a closure element (5) which reaches over the opening, is inwardly pivotably mounted on a central pin (13), which central pin (13) is formed on a first end (6) of the frame (1) and meshes with the closure element (5), engages with the second end (7) of the frame (1), and is provided with an open bore (9) on the pivot bearing side, in which bore (9) an arresting slide (11), applied by means of a spring return (10), is displaceably arranged longitudinally with respect to the closure element (5), wherein the arresting slide (11) is provided with an arresting surface (16) facing into the interior of the frame (1), which arresting surface (16) lies against a supporting surface (14) which is eccentric with respect to the pivotal axis (8) and lies in the pivot path of the closure element (5) and is moveable, by means of an external operating catch (12), between a closing position arresting the pivoting movement of the closure element (5) and a release position allowing the opening motion of the closure element (5), and wherein the eccentric supporting surface (14, 15) is provided with a track (14) for the arresting slide (14), and the distance from the pivotal axis increases with the increasing pivotal angle.

2. Karabiner according to claim 1, characterised in that the arresting surface (16) of the arresting slide (11) extends towards the interior of the frame at a self-locking angle (α) to the longitudinal axis of the arresting slide (11).

3. Karabiner according to claim 2, characterised in that the angle (α) is approximately 15°.

4. Karabiner according to one of claims 1 to 3, characterised in that the operating catch (12) is arranged on an arm (21) of the arresting slide (11) which extends diagonally backwards.

5. Karabiner according to claim 4, characterised in that the arm (21) of the arresting slide (11) extends at an angle of approximately 45° to the longitudinal axis.

6. Karabiner according to one of claims 1 to 5, characterised in that the arresting slide (11) is provided with an axial bore (22) in which the spring return (10) is supported.

7. Karabiner according to one of claims 1 to 6, characterised in that the second end (7) of the frame (1) is inwardly inclined and a recess is provided on both sides of a central pin located on the plane of the frame (1), and that the engagement area (20) of the closure element (5) is provided with a diagonal longitudinal groove (23) corresponding to the central pin (19) and end hooks (18) corresponding to the grooves (17), which are separated from the rest of the closure element (5) by means of a transverse groove (24).

8. Karabiner according to one of claims 1 to 7, characterised in that the karabiner is approximately trapeziform in shape, of which the closure element (5) represents a lateral arm, wherein the first frame end (6) is curved upwardly from the bottom arm (4) and the second frame end (7) is curved downwardly from the top arm (3).

9. Karabiner according to claim 8, characterised in that the bottom arm (4) and the top arm (3) are each curved towards the interior of the frame.

10. Karabiner according to claim 8, characterised in that the lateral arm (2) lying opposite the closure element (5) is widened, and possibly flattened, on the plane of the frame.

## Revendications

1. Mousqueton avec une boucle (1) présentant une ouverture d'introduction et avec un élément de fermeture (5) enjambant l'ouverture, qui est monté, en pouvant pivoter vers l'intérieur, sur une branche médiane (13) s'insérant dans l'élément de fermeture (5), ménagée sur une première extrémité (6) de la boucle (1), l'élément de fermeture (5) venant se loger dans la deuxième extrémité (7) de la boucle (1) et présentant une forure (9) ouverte en direction du palier de pivotement, dans laquelle est disposé un coulisseau de blocage (11) sollicité par un ressort de rappel (10) et pouvant coulisser dans le sens longitudinal de l'élément de fermeture (5), le coulisseau de blocage (11) présentant une surface de blocage (16) tournée vers l'intérieur de la boucle, venant en appui sur une surface d'appui (14) de la branche médiane (13), excentrée par rapport à l'axe de pivotement (8) et située sur le trajet de pivotement de l'élément de fermeture (5), le coulisseau étant mobile au moyen d'une touche d'actionnement (12) extérieure entre une position de fermeture bloquant le pivotement de l'élément de fermeture (5) et une position de dégagement permettant le mouvement d'ouverture de l'élément de fermeture (5), tandis que la surface d'appui excentrée (14, 15) présente une piste de glissement (14) pour le coulisseau de blocage (11), la distance entre cette piste et l'axe de pivotement (8) augmentant quand l'angle de basculement augmente.

2. Mousqueton selon la revendication 1, caractérisé en ce que la surface de blocage (16) du coulisseau de blocage (11) s'étend selon un angle d'auto-blocage (α) par rapport à l'axe longitudinal du coulisseau de blocage (11) en direction de l'intérieur de la boucle.

3. Mousqueton selon la revendication 2, caractérisé en ce que l'angle (α) est d'environ 15°.

4. Mousqueton selon une des revendications 1 à 3, caractérisé en ce que la touche d'actionnement (12) est disposée sur une branche (21) du coulisseau de blocage (11) s'étendant obliquement vers l'arrière.

5. Mousqueton selon la revendication 4, caractérisé en ce que la branche (21) du coulisseau de blocage (11) s'étend selon un angle d'environ 45° par rapport à l'axe longitudinal.

6. Mousqueton selon une des revendications 1 à 5, caractérisé en ce que le coulisseau de blocage (11) présente une forure axiale (22) dans laquelle le ressort de rappel (10) prend appui.

7. Mousqueton selon une des revendications 1 à 6, caractérisé en ce que la deuxième extrémité (7) de la boucle (1) est biseautée vers l'intérieur et un évidement (17) est prévu de part et d'autre d'une branche médiane (19) située dans le plan de la boucle, et en ce que la zone d'insertion (20) de l'élément de fermeture (5) présente une rainure longitudinale oblique (23) correspondant à la branche médiane (19) et un crochet d'extrémité (18) correspondant aux évidements (17), ces éléments (23, 18) étant séparés du reste de l'élément de fermeture (5) par une rainure transversale (24).

8. Mousqueton selon une des revendications 1 à 7, caractérisé en ce qu'il présente une forme sensiblement trapézoïdale, dans laquelle l'élément de fermeture (5) représente une branche latérale, la première extrémité (6) de la boucle étant coudée vers le haut à partir de la branche de base (4) et la deuxième extrémité (7) de la boucle étant coudée vers le bas à partir de la branche supérieure (3).

9. Mousqueton selon la revendication 8, caractérisé en ce que la branche de base (4) et la branche supérieure (3) sont l'une et l'autre courbées vers l'intérieur de la boucle.

10. Mousqueton selon la revendication 8, caractérisé en ce que la branche latérale (2) opposée à l'élément de fermeture (5) est élargie dans le plan de la boucle et est aplatie, le cas échéant.
